# EUROPEAN PATENT APPLICATION

(11) **EP 4 238 797 A1**
(43) Date of publication of application: **06.09.2023**
(21) Application number: 23158578.7
(22) Date of filing: 24.02.2023
(51) Int. Cl.: B60K 1/00, B60K 17/16

(54) **ELECTRIC PROPULSION SYSTEM FOR A HEAVY VEHICLE**

(30) Priority: 02.03.2022 IT 202200003947
(71) Applicant: FPT Industrial S.p.A., 10156 Torino (IT)
(72) Inventor: ROSSIA, Giorgio, 10156 Torino (IT); TESSITORE, Marco, 10156 Torino (IT)
(74) Representative: Fiume, Orazio

(57) **Abstract**

Electric transmission (T) for heavy vehicle (VEH) comprising a first electric motor (M1) of the type capable of reaching a rotation speed of at least 10,000 rpm, a first epicyclic reduction unit (EP1) with parallel axes, having input shafts (EPin) and output (EPout) coaxial to each other and arranged parallel to the shaft of the first electric motor, a differential (DF) equipped with an input ring gear (DFr) and two semi-axes (S1, S2) arranged to drive respective rotation wheels (W) of the vehicle, in which the axle shafts are arranged parallel to the shaft (Ms) of the first electric motor.

## Description

### Field of the invention

The present invention relates to the field of electric propulsion systems for heavy vehicles.

### State of the art

In the field of electric propulsion, private cars are those with the highest degree of development.

Automobiles are required to perform certain features that are very different from heavy vehicles. In particular, low torque values and relatively high maximum speed values are required for automobiles, while high torque values and relatively low maximum speed values are required for heavy vehicles.

In the field of automobiles, high-performance propulsion electric motors have been developed, capable of reaching very high rotation speeds. In some cases, such engines certainly exceed 10,000 rpm and often reach 30,000 rpm and even more.

This implies having to provide higher reduction ratios of at least 1:30.

Furthermore, the stator of these electric motors is relatively large and is generally housed inside the vehicle body of the automobile.

In the context of heavy vehicles, the transmission components are generally arranged under the loading surface between or adjacent to the side members having a structural function.

When heavy vehicles are also electric, the relative propulsion batteries are also arranged under the loading surface, resulting in a further reduction in the available space.

The height of the loading platform must be as low as possible to avoid reducing the load volume of the vehicle, since the height of the vehicle must be lower than a predetermined threshold set by the regulations.

All of this means that the space under the cargo floor is limited.

If one wants to implement high-performance electric motors in heavy vehicles, it is necessary to prepare relevant cascades of gears to obtain an adequate reduction ratio. The fundamental problem therefore is that of preparing an efficient transmission that occupies a limited space.

A further problem is its modularity. In fact, it may be necessary to vary the power available to the wheel without however upsetting the entire design of the transmission. Unless specifically excluded in the detailed description that follows, what is described in this chapter is to be considered as an integral part of the detailed description.

### Summary of the invention

The object of the present invention is to propose a space-saving electric transmission implementing an electric propulsion motor capable of exceeding 10,000 rpm in the context of heavy vehicles.

The basic idea of the present invention is that of implementing a first epicyclic reduction gear arranged next to the stator of the first electric motor so that the relative input and output axes are parallel with the shaft of the first electric motor and with the shaft of the first epicyclic reduction gear which drives the crown wheel of an orthogonal differential by means of a flat coupling.

The result is that the axle shafts of the differential are also approximately parallel to the shaft of the electric motor.

Preferably, according to an axial view with the drive shafts of the differential, the drive shafts of the differential define a first point, the input and output shafts of the first epicyclic reduction gear, being coaxial with each other, define a common second point and the shaft of the first electric motor defines a third point. The union of the first point with the second point identifies a first half straight line, while the union of the second point with the third point identifies a second half straight line. The first half straight line and the second half straight line, according to said axial view, are incident forming an angle between 70° and 100°.

According to a further preferred variant of the invention, the same differential is associated with a second electric motor connected in the same manner as the first electric motor by means of a second epicyclic reduction gear. According to the aforementioned axial view, the input and output shafts of the second epicyclic reduction unit define a fourth common point and the half straight line between the first point and the fourth point defines a third half straight line.

The arrangement of the first electric motor is symmetrical to the arrangement of the second electric motor with respect to a straight line bisector of the angle identified by the first and fourth half straight lines.

This configuration is optimal for doubling the drive power of the driving axle, without increasing the overall dimensions between the vehicle loading surface and the ground.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and non-limiting purposes, in which:
Fig. 1 shows a schematic axial view of a transmission according to a first preferred variant of the invention;
Fig. 2 shows a schematic plan view of the transmission of figure 1;
Fig. 3 shows an enlargement of a portion of Fig. 2;
Figs. 4 and 5 show a variant of the invention according to views corresponding to those of figures 1 and 2;
Figs. 6-8 show preferred variants of an electric vehicle provided with at least one electric transmission according to the variants shown in the previous figures. The plan views are rectified in the plan to make the diagrams clearer to understand. In other words, the half lines described above are made coplanar.

The same reference numbers and letters in the figures identify the same elements or components or functions.

It should also be noted that the terms "first", "second", "third", "superior", "inferior" and the like may be used herein to distinguish various items. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

### Detailed description

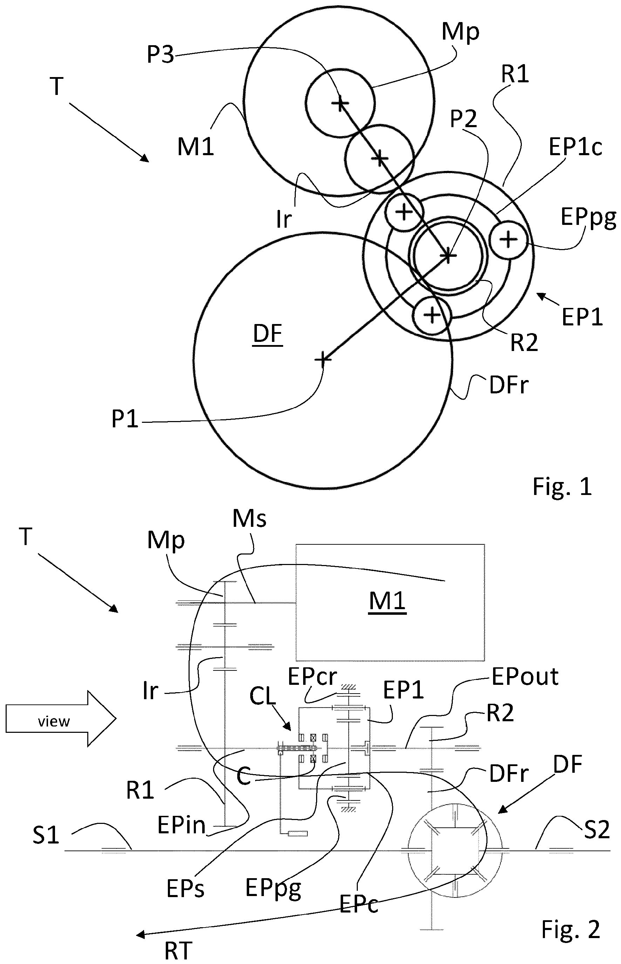

With reference to figures 1 and 2, the transmission T object of the present invention comprises
- A first electric motor M1 of the type capable of reaching a rotation speed of at least 20,000 rpm,
- A first epicyclic reduction EP1 unit with parallel axes, with the input and output shafts coaxial to each other and arranged parallel to the shaft of the first electric motor;
- A differential DF equipped with an input rim DFr and two drive shafts S1 and S2 arranged to drive in rotation respective wheels of a vehicle, in which the drive shafts are arranged parallel to the shaft of the first electric motor.

With reference to Fig. 2, the first epicyclic reduction unit is arranged in an approximately medial position with respect to the axle defined by the differential DF and the relative drive shafts S1, S2. The first electric motor, the first epicyclic reduction unit and the differential define an approximately S-shaped motion path RT, in fact, the differential is arranged, in Fig. 2, on the right side to make room for the first epicyclic reduction unit EP1. Although the planetary reduction unit shown is of the single type, it is possible to install one or more of them in cascade, so as to increase the transmission ratio.

According to a side view of the transmission, i.e. according to an axial view with the drive shafts of the differential, the drive shafts of the differential define a first point P1, the input shafts EPin and output EPout of the first epicyclic reduction gear, being coaxial with each other, define a common second point P2 and the shaft Ms of the first electric motor M1 defines a third point P3. The union of the first point with the second point identifies a first half straight line, while the union of the second point with the third point identifies a second half straight line. The first half straight line and the second half straight line, according to said axial view, are incident forming an angle between 70 and 100°.

A pinion Mp, hereinafter referred to as the "pinion of the first electric motor", is splined onto the shaft Ms of the first electric motor.

A first gear wheel R1 is splined onto the input shaft EPin of the first epicyclic reduction unit and is coplanar with the pinion of the first electric motor.

The pinion is arranged to drive the first gear wheel R1 in rotation either directly or by means of a first idle gear

Ir. The presence of the first idler gear depends on the transverse dimensions of the first planetary gearbox and on the transverse dimensions of the stator of the first electric motor M1.

In fact, the elimination of the first idle gear may lead to having to widen the radius of the first toothed wheel R1, which could collide with a half driving shaft S1 of the differential.

Preferably, the transmission ratio between the pinion Mp of the first electric motor and the first gear wheel R1 is between 1:1.5 and 1:2.5.

The epicyclic reduction gear is preferably of the type with parallel axes with
- the input shaft EPin associated with a clutch CL arranged to achieve two transmission ratios, better described below,
- the output shaft EPout is associated with the planet-holder cage EPc.

In a per se known way, the EPpg satellites mesh with the EPcr crown and with the EPs solar array. The crown EPcr is fixed.

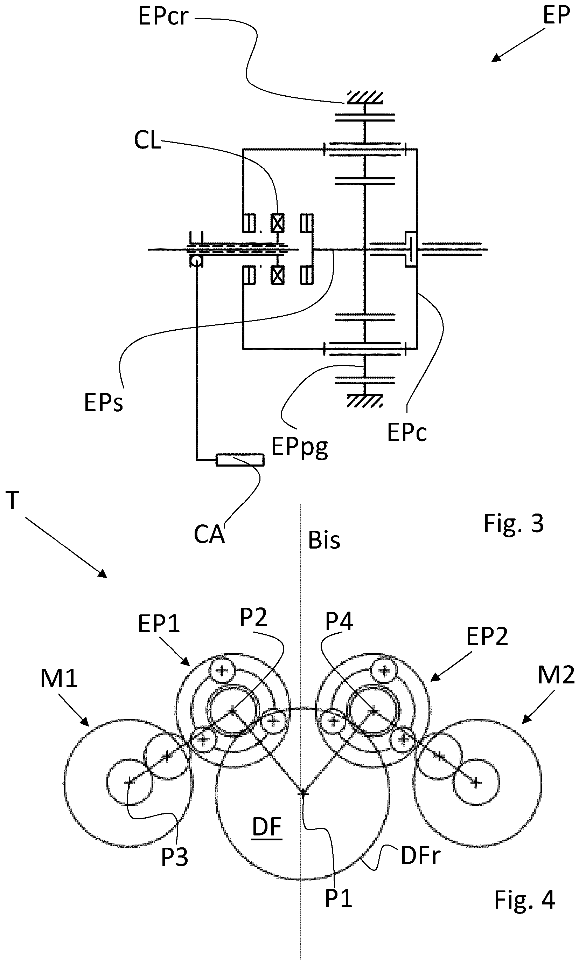

With reference to Fig.3, the actuation system includes the clutch CL and is arranged
- according to a first operating mode for connecting in rotation the input shaft EPin with the solar EPs, obtaining a transmission ratio between 1:3 and 1:4;
- according to a second operating mode for connecting in rotation the input shaft EPin with the planet-bearing cage EPc obtaining a unitary transmission ratio.

The output shaft comprises a pinion R2 arranged to drive the ring gear DFr of the differential DF in rotation.

Preferably, the pinion R2 of the output shaft of the first epicyclic reduction unit EP1 and the ring gear DFr of the differential are coplanar and define a transmission ratio between 1:2 and 1:3.5.

With reference to Fig. 4, a transmission based on that of Figs. 1 and 2 is proposed.

In addition to a first electric motor M1 connected to the differential DF by means of the first epicyclic reduction unit EP1, the solution provides a second electric motor M2 connected to the differential DF by means of the second epicyclic reduction unit EP2.

In other words, the motion generated by two electric motors through their respective planetary reduction units converges on the same differential.

It should be considered that in this way, each transmission is sized to strictly support the torque generated by the respective electric motor.

According to figure 4, the input and output shafts of the second epicyclic reduction unit define a fourth common point P4 and the first point P1 and the fourth point identify a third half straight line.

The arrangement of the first electric motor and of the related first epicyclic reduction gear is symmetrical to the arrangement of the second electric motor and related second epicyclic reduction gear with respect to a straight line bisector Bis of the angle identified by the first and third half straight lines.

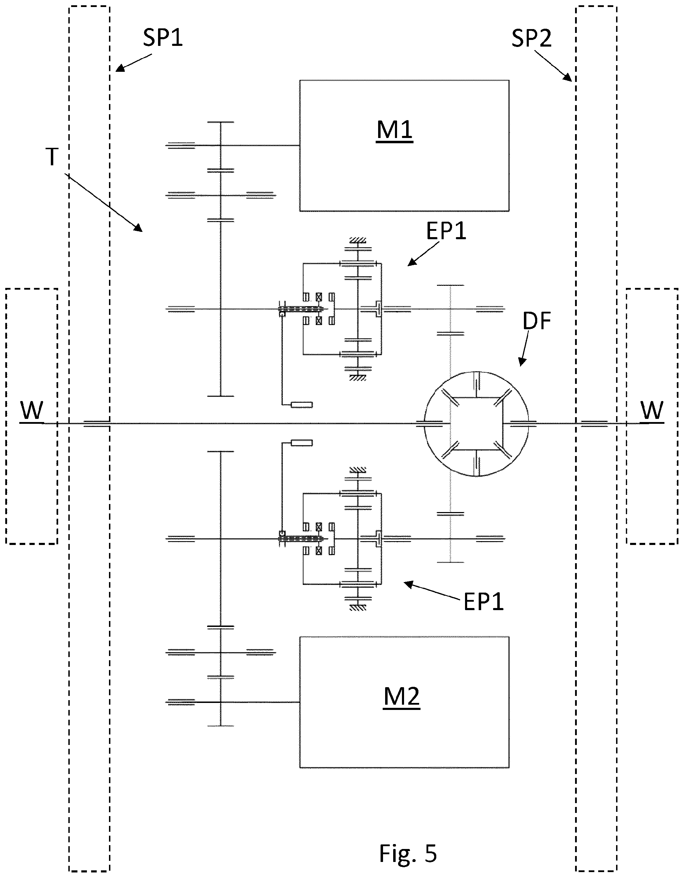

Fig. 4 shows that the solution with two electric motors draws a sort of open "M". This solution is optimal, as the overall height is limited and because the transmission can be housed between the side members of the vehicle chassis which support the loading surface. Fig. 5 shows the same solution of Fig. 4 according to a schematic plan view. Shown here are the SP1 and SP2 spars, within which the transmission is installed.

It is therefore understood that the present technical solution is modular, since two electric motors can relate to the same differential DF.

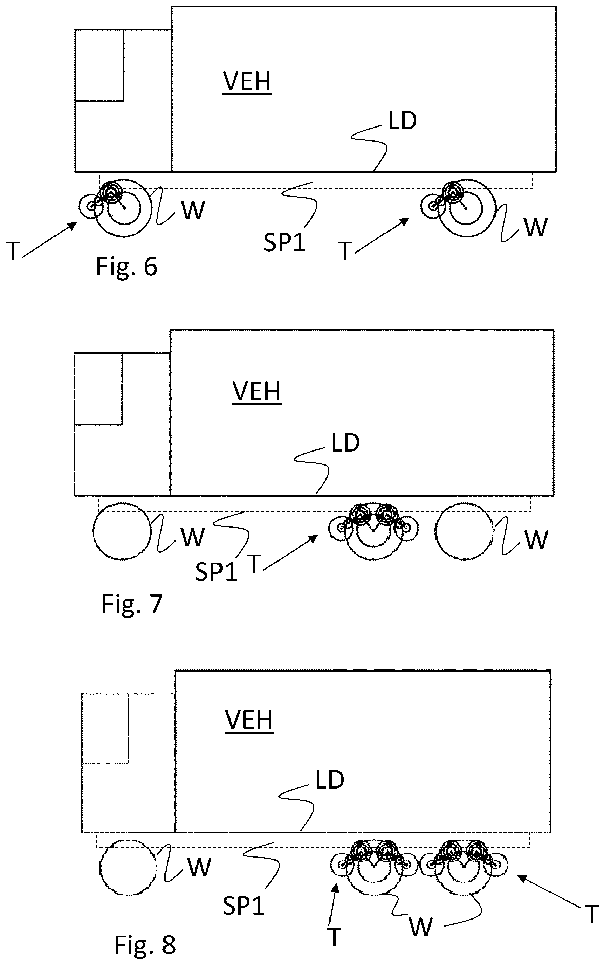

Figs. 6-8 show possible implementations of the present invention.

Figure 6 shows a so-called 4x4 in which the vehicle is equipped with two axles and both are driving axles equipped with a transmission T with a single electric motor.

Fig. 7 shows a 6x2 vehicle, i.e. in which only one axle among three is driving. In this case the transmission T implemented is a double electric motor.

Fig. 8 shows a 6x4 vehicle in which two of the three axles are driving and in particular the rear ones. Preferably, the transmissions implemented are both dual electric motors.

According to a preferred variant of the invention, further planetary reduction units, not shown, can be arranged on the drive shafts S1 and S2, so as to further increase the reduction ratio of the transmission, for example by a ratio between 1:2 and 1:3.

This aspect can be advantageous, since these reduction units can be housed inside the vehicle wheels W.

Combinations of the variants shown can be made. For example, a 6x6 configuration can be implemented in which all the axles are driving, or a 6x4 configuration in which the two driving axles are provided, one with a single electric motor transmission and the other with a double electric motor transmission.

Variants of the non-limiting example described are possible, without however departing from the scope of protection of the present invention, including all equivalent embodiments for a person skilled in the art, to the contents of the claims.

From the description given above, the person skilled in the art is capable of realizing the object of the invention without introducing further constructive details.

## Claims

1. Electric driveline (T) for heavy vehicle (VEH) comprising
- a first electric motor (M1) of the type capable of reaching a maximum rotation speed of at least 10,000 rpm,
- a first epicycloidal step-down gearing (EP1) with parallel axes, having input (EPin) and output (EPout) shafts coaxial with each other and arranged parallel to the shaft of the first electric motor;
- a differential (DF) equipped with an input crown (DFr) and two drive shafts (S1, S2) arranged to drive the respective wheels (W) of the vehicle in rotation, wherein the drive shafts are arranged parallel to a shaft (Ms) of the first electric motor.

2. Driveline according to claim 1, wherein the first epicycloidal step-down gearing is arranged in a position approximately medial with respect to an axle defined by the differential (DF) and by the relative drive shafts (S1, S2) .

3. Driveline according to claim 1 or 2, wherein according to an axial view (view) with the differential drive shafts, said drive shafts define a first point (P1), the input (EPin) and output (EPout) shafts of the first epicycloidal step-down gearing define a common second point (P2) and the shaft (Ms) of the first electric motor (M1) defines a third point (P3) and wherein a union of the first point with the second point identifies a first ray, a union of the second point with the third point identifies a second ray and wherein the first ray and the second ray, according to said axial view, are incident forming an angle between 70 and 100 °.

4. Driveline according to claim 3, wherein, according to a rectified plan view, the first electric motor (M1), the first epicycloidal step-down gearing (EP1) and the differential (DF) define a path (RT) of motion approximately S-shaped, where the differential is arranged on one side to accommodate the first epicycloidal step-down gearing (EP1).

5. Driveline according to any one of the preceding claims, further comprising a second electric motor (M2) operatively connected to the differential (DF) by means of a relative second epicycloidal step-down gearing (EP).

6. Driveline according to any one of the preceding claims 3
- 5, wherein the input and output shafts of the second epicycloidal step-down gearing (EP2) define a fourth common point (P4) defining a third ray comprised between the first point (P1) and the fourth point (P4) and wherein the arrangement of the first electric motor and its first epicycloidal step-down gearing is symmetrical to the arrangement of the second electric motor and its second epicycloidal step-down gearing with respect to a straight bisector (Bis) of an angle identified by the first and third ray.

7. Driveline according to claim 6, wherein the driveline portion comprised between the first electric motor and the differential is identical and symmetrical to the driveline portion comprised between the second electric motor and the differential.

8. Driveline according to any one of the preceding claims, wherein a pinion (Mp) is keyed on the shaft (Ms) of the first and/or electric motor, a first toothed wheel (R1) is keyed on the input shaft (EPin) of the first and/or second epicycloidal step-down gearing, coplanar with the pinion of the first and/or second electric motor, so that the pinion is arranged to drive the first toothed wheel (R1) in rotation directly or by means of a first idle gear (Ir).

9. Driveline according to claim 8, wherein a gear ratio between the pinion (Mp) of the first and/or second electric motor and the first toothed wheel (R1) is between 1: 1.6 and 1: 1.8.

10. Driveline according to any one of the preceding claims, wherein said first and/or second epicycloidal step-down gearing comprises a clutch (CL) suitable for realizing two gear ratios, wherein a first gear ratio has a value of 1:1 and a second gear ratio ranging between 1:3 and 1:4.

11. Driveline according to any one of the preceding claims, wherein the output shaft (EPout) comprises a pinion (R2) arranged to rotate a crown (DFr) of the differential (DF), lying coplanar with each other and defining a gear ratio between 1:2 and 1:2.5.

12. Heavy vehicle (VEH) comprising a loading floor (LD) and a pair of side members (S1, S2) arranged under the loading floor to support the loading floor, and further comprising at least one driveline (T) according to any one of the preceding claims, arranged between said pair of side members.
